# EUROPÄISCHE PATENTSCHRIFT

(11) **EP 2 341 326 B1**
(45) Veröffentlichungstag und Bekanntmachung des Hinweises auf die Patenterteilung: **05.07.2017**
(21) Anmeldenummer: 10197270.1
(22) Anmeldetag: 29.12.2010
(51) Int. Cl.: G01K 1/14, G01K 1/16, G01K 17/08

(54) **Heizkostenverteiler**
Heating cost distributor
Répartiteur de coûts de chauffage

(30) Priorität: 02.01.2010 DE 102010003967
(43) Veröffentlichungstag der Anmeldung: 06.07.2011
(73) Patentinhaber: QUNDIS GmbH, 99098 Erfurt (DE)
(72) Erfinder: Gerner, Rene, 99974, Mühlhausen (DE); Wöhrstein, Hermann, 78052, Villingen-Schwenningen (DE); Hintz, Fred, 78112, St. Georgen (DE); Dobeneck, Wolfgang, 99996, Menteroda OT Urbach (DE)
(74) Vertreter: Liedtke, Markus

(56) Entgegenhaltungen:
- DE-A1- 19 938 812
- DE-A1-102006 062 115
- DE-U1- 29 515 173

## Beschreibung

Die Erfindung betrifft einen Heizkostenverteiler nach den Merkmalen des Oberbegriffs des Anspruchs 1.

Elektronische Heizkostenverteiler dienen der Messung der von einem Heizkörper abgegebenen Wärmemenge. Dazu werden Temperatursensoren benötigt, die die Oberflächentemperatur des Heizkörpers und bei den Zweifühlergeräten auch die Raumlufttemperatur erfassen müssen.

Aus dem Stand der Technik ist, wie in der DE 199 38 812 A 1 beschrieben, ein elektronischer Heizkostenverteiler bekannt. Der elektronische Heizkostenverteiler umfasst einen ersten Temperatursensor zur Ermittlung der Oberflächentemperatur des Heizkörpers, einen zweiten Temperatursensor zur Ermittlung der Zimmertemperatur, eine Auswerteelektronik, die mit den Temperatursensoren verbunden ist und ein Gehäuse, das geschlossen und geöffnet werden kann. Die Temperatursensoren sind an gegenüberliegenden Enden einer die Auswerteelektronik tragenden Leiterplatte angeordnet. Das den ersten Temperatursensor tragende Ende der Leiterplatte wird mittels eines Federelementes gegen die Wärme leitende Rückseite des Gehäuses thermisch kontaktierend angedrückt. Dabei ist die Leiterplatte um eine Achse dreh- bzw. schwenkbar oder elastisch verformbar ausgebildet und vorzugsweise schräg im Gehäuse angeordnet.

Des Weiteren wird in der DE 295 15 173 U 1 ein elektronischer Heizkostenverteiler beschrieben. Der elektronische Heizkostenverteiler umfasst mindestens einen ersten Temperatursensor, insbesondere zur Ermittlung der Oberflächentemperatur eines Heizkörpers, und mindestens einen zweiten Temperatursensor, insbesondere zur Ermittlung der Raumtemperatur, sowie eine elektronische Auswerteeinheit, die mit den Temperatursensoren elektrisch verbunden ist, wobei die Temperatursensoren und die elektronische Auswerteeinheit innerhalb eines öffen- und schließbaren Gehäuses angeordnet sind. Die Temperatursensoren sind auf einem einzigen biegeelastischen Leiterband angeordnet, welches mit der elektronischen Auswerteeinheit verbunden ist.

Ferner ist aus der EP 1 925 924 A1 ein Heizkostenverteiler zur Erfassung der von einem Heizkörper in einem Raum abgegebenen Wärmemenge, mit einem Gehäuse und einer an einer Heizkörperoberfläche montierbaren wärmeleitfähigen Trägerplatte bekannt, welche eine Rückwand für das Gehäuse bildet und einer innerhalb des Gehäuses angeordneten Leiterplatte, die einen Heizkörpertemperatursensor und einen Raumluftsensor aufweist, wobei die Leiterplatte senkrecht zu der Trägerplatte angeordnet ist, wobei eine Stirnfläche der Leiterplatte, die der Trägerplatte zugewandt ist, einen Messkontakt für den Heizkörpertemperatursensor aufweist und eine weitere Stirnfläche der Leiterplatte welche dem Gehäuse zugewandt ist, einen Messkontakt für den Raumlufttemperatursensor aufweist.

In der DE 298 04 071 U1 ist eine Vorrichtung zum Messen der abgegebenen Wärmemenge eines Heizkörpers mit einem am Heizkörper befestigten Rückenteil, welches auf der dem Heizkörper abgewandten Vorderseite eine erste Profilleiste als Wärmekontakt für einen Temperatursensor sowie eine zweite Profilleiste für eine Plombe aufweist, sowie mit einem auf der Vorderseite des Rückenteils angeordneten Gehäuse zur Aufnahme der Messeinrichtung mit dem Temperatursensor sowie der Plombe beschrieben, wobei die erste Profilleiste auf der dem Temperatursensor zugeordneten und mit diesem in Kontakt stehenden Oberseite im Wesentlichen eben ist und dass die zweite Profilleiste kanalförmig ausgebildet ist, wobei in dem Kanal die Plombe in senkrechter Richtung zur Ebene des Rückenteils einrastbar ist.

Aus der DE 20 2008 009 276 U1 ist eine Vorrichtung zum elektronischen Erfassen der Wärmeabgabe eines Heizkörpers, mit einem metallischen Rückteil und einem Gehäuse, mit einer Platine mit einem mit einem Wärmeleiter in Verbindung stehenden Heizkörper-Temperatursensor zum Messen der vom Heizkörper abgegebenen Wärmemenge bekannt, wobei der Wärmeleiter an seiner Auflageseite zum Rückteil wellig mit zwei Wellenbergen ausgebildet ist, mit denen er auf dem Rückteil aufliegt.

Der Erfindung liegt die Aufgabe zugrunde, einen verbesserten Heizkostenverteiler anzugeben.

Die Aufgabe wird erfindungsgemäß gelöst durch einen Heizkostenverteiler mit den Merkmalen des Anspruchs 1.

Vorteilhafte Ausgestaltungen der Erfindung sind Gegenstand der Unteransprüche.

Ein Heizkostenverteiler zur Messung einer von einem Heizkörper abgegebenen Wärmemenge weist ein Gehäuse auf, welches ein Gehäusevorderteil und ein Gehäuserückteil umfasst und in welchem mindestens ein Heizkörpertemperatursensor, mindestens ein Raumlufttemperatursensor und eine Auswerteeinheit angeordnet sind, wobei die Auswerteeinheit auf einer Hauptleiterplatte angeordnet und mit den Temperatursensoren elektrisch verbunden ist.

Erfindungsgemäß ist der Heizkörpertemperatursensor auf einer Sensorleiterplatte angeordnet, welche über zumindest zwei Federelemente mit der Hauptleiterplatte mechanisch und elektrisch verbunden ist und mittels dieser Federelemente gegen das Gehäuserückteil des Gehäuses des Heizkostenverteilers gepresst ist.

Der Heizkörpertemperatursensor ist über diese Federelemente mit der Auswerteeinheit auf der Hauptleiterplatte elektrisch verbunden, so dass Sensorsignale des Heizkörpertemperatursensors in der Auswerteeinheit verarbeitbar sind. Durch das Anpressen der Sensorleiterplatte gegen das Gehäuserückteil ist eine thermische Kopplung des Heizkörpertemperatursensors an das Gehäuserückteil, mittels welchem der Heizkostenverteiler am Heizkörper befestigt ist, optimiert.

Des Weiteren ist ein vorderer Bereich des Heizkostenverteilers, welcher der Raumluft zugewandt ist und in welchem der Raumlufttemperatursensor angeordnet ist, vom Heizkörper weitestgehend thermisch entkoppelt, da die Sensorleiterplatte lediglich über die Federelemente mit der Hauptleiterplatte verbunden ist. Dadurch ist eine Wärmeübertragung von der Sensorleiterplatte auf die Hauptleiterplatte und über diese in den vorderen Bereich des Heizkostenverteilers und auf den Raumlufttemperatursensor minimiert.

Dies ermöglicht sowohl eine exakte Erfassung der Heizkörpertemperatur als auch der Raumlufttemperatur und dadurch eine exakte Ermittlung der von einem Heizkörper abgegebenen Wärmemenge. Aufgrund dieser optimierten thermischen Entkopplung der beiden Sensoren voneinander ist dieser Heizkostenverteiler für alle Anwendungsgebiete geeignet, insbesondere auch für Niedertemperaturheizungen.

Die optimierte thermische Kopplung des Heizkörpertemperatursensors an das Gehäuserückteil und über dieses an den Heizkörper und die optimierte thermische Entkopplung des Raumlufttemperatursensors vom Heizkörper ist durch die erfindungsgemäße Lösung auf sehr einfache und effektive Weise realisiert, da insbesondere eine im Stand der Technik realisierte komplizierte schwenkbare Lagerung der Hauptleiterplatte oder eine elastische Hauptleiterplatte bzw. ein kompliziert zu verlegendes Leiterband nicht erforderlich sind. Des Weiteren ist bei derartigen Lösungen nach dem Stand der Technik eine optimale thermische Entkopplung der beiden Sensoren nicht zu realisieren, da jeweils beide Sensoren auf einer Leiterplatte oder auf einem Leiterband angeordnet und darüber miteinander thermisch gekoppelt sind.

Bei Verwendung der erfindungsgemäßen Lösung sind Herstellungskosten gegenüber Geräten nach dem Stand der Technik erheblich minimiert, da als Heizkörpertemperatursensor ein kostengünstiger so genannter NTC-Widerstand (Negative Temperature Coefficient Thermistors) in SMD-Bauform (Surface-mounted device), d. h. als oberflächenmontierbares Bauelement einsetzbar und automatisiert auf der Sensorleiterplatte montierbar ist.

Des Weiteren ist die Sensorleiterplatte zusammen mit der Hauptleiterplatte in einem Fertigungsprozess automatisiert herstellbar, d. h. es sind automatisiert alle Bauelemente installierbar und kontaktierbar und weitere Metallisierungen, Kontaktierungen und Leiterbahnen aufbringbar. Danach ist die Sensorleiterplatte von der Hauptleiterplatte abzutrennen und mittels der Federelemente an der Hauptleiterplatte zu befestigen. Dadurch fallen zur Herstellung der Sensorleiterplatte keine zusätzlichen Herstellungskosten und kein zusätzlicher Herstellungsaufwand an. Des Weiteren sind auch die Federelemente zur Verbindung der Sensorleiterplatte mit der Hauptleiterplatte sehr kostengünstig.

Durch die Verwendung eines derartigen NTC-Widerstandes in SMD-Bauform als Heizkörpertemperatursensor sind die Sensorleiterplatte und der Heizkörpertemperatursensor sehr klein ausführbar und daher sehr Bauraum sparend im Heizkostenverteiler installierbar, wodurch eine Größe, insbesondere eine Dicke des Heizkostenverteilers verringert ist. Dadurch ist der Heizkostenverteiler sehr klein ausführbar und unauffällig und Bauraum sparend am Heizkörper anordbar.

Als weiteren Vorteil ermöglicht die mittels der Federelemente an das Gehäuserückteil gepresste Sensorleiterplatte, welche vorzugsweise senkrecht zu einer dem Gehäuserückteil zugewandten Seite der Hauptleiterplatte angeordnet ist, eine Verwendung einer Vielzahl verschieden profilierter Gehäuserückteile. Die Gehäuserückteile welche als Wärmeleitelement ausgebildet sind, um die Wärmeübertragung vom Heizkörper zum Heizkörpertemperatursensor zu optimieren, weisen entsprechend einem jeweiligen Einsatzbereich des Heizkostenverteilers jeweils eine unterschiedliche Dicke auf, woraus jeweils ein unterschiedlicher Abstand von der Hauptleiterplatte zum Gehäuserückteil resultiert.

Mittels der Federelemente, welche vorzugsweise als Schraubenfedern aus einem metallischen und bevorzugt gut lötbaren Werkstoff, z.B. verzinnte Berylliumbronze, ausgebildet sind, sind sowohl größere als auch kleinere Abstände überbrückbar, wodurch die Sensorleiterplatte an jedes Gehäuserückteil optimal anpressbar und thermisch koppelbar und mit der Hauptleiterplatte sicher elektrisch kontaktierbar ist, wobei eine Breite des Heizkostenverteilers minimiert ist und jeweils gleich bleibt bzw. eine Maximalbreite nicht überschreitet. Dadurch ist der Heizkostenverteiler sehr flexibel einsetzbar und lediglich durch eine Auswahl eines jeweils geeigneten Gehäuserückteils an den jeweiligen Einsatzbereich anzupassen. Dies ermöglicht eine sehr effiziente und kostengünstige Produktion des Heizkostenverteilers in großen Stückzahlen, da nicht für jeden Einsatzbereich eine andere Ausführungsform erforderlich ist.

Das Gehäusevorderteil ist mit dem jeweiligen, vorzugsweise bereits am Heizkörper befestigten Gehäuserückteil über jeweilige Gehäusemerkmale befestigbar, mittels welchen beispielsweise eine Rastverbindung realisiert ist. Zusätzlich ist das Gehäuse vorzugsweise mittels einer zerstörungsfrei nicht lösbaren Verbindung sicherbar, beispielsweise mit einer Plombe. Dadurch ist eine Manipulation des Heizkostenverteilers verhindert bzw. eine erfolgte Manipulation ist sicher und eindeutig erkennbar.

Zweckmäßigerweise sind die Federelemente mit der Hauptleiterplatte und/oder mit der Sensorleiterplatte verlötet. Dies ermöglicht eine einfach zu realisierende und daher kostengünstige und des Weiteren eine mechanisch und elektrisch sichere Verbindung der Federelemente mit der Sensorleiterplatte bzw. mit der Hauptleiterplatte.

Vorzugsweise ist zwischen dem Gehäuserückteil und der Sensorleiterplatte mit dem Heizkörpertemperatursensor eine elektrisch isolierende Wärmeleitfolie angeordnet. Diese Wärmeleitfolie ist zweckmäßigerweise aus Kunststoff, zum Beispiel aus Polyimid, und weist für eine optimierte Wärmeleitung vorteilhafterweise eingelagerte Metallpartikel auf, beispielsweise Aluminiumpartikel. Mit dieser sehr kostengünstigen Wärmeleitfolie sind bevorzugt die gesamte oder nahezu die gesamte Sensorleiterplatte und der Heizkörpertemperatursensor umhüllt, so dass diese elektrisch beispielsweise gegenüber des vorzugsweise metallisch ausgebildeten Gehäuserückteils sowie gegenüber der Hauptleiterplatte isoliert sind und eine thermische Kopplung des Heizkörpertemperatursensors über die Wärmeleitfolie an das Gehäuserückteil und über dieses an den Heizkörper optimiert ist.

Bevorzugt ist der Heizkörpertemperatursensor im Bereich eines dem Gehäuserückteil zugewandten Endes der Sensorleiterplatte angeordnet und dadurch in unmittelbarer Nähe zum Gehäuserückteil positioniert bzw. an dieses angepresst, wodurch die Wärmeübertragung vom Heizkörper über das Gehäuserückteil zum Heizkörpertemperatursensor optimiert ist.

Um diese Wärmeübertragung noch zusätzlich zu optimieren, weist das dem Gehäuserückteil zugewandte Ende der Sensorleiterplatte vorzugsweise eine Wärmeleitbeschichtung auf, mit welcher der Heizkörpertemperatursensor thermisch kontaktiert ist.

Zweckmäßigerweise ist diese Wärmeleitbeschichtung eine metallische Beschichtung, welche durch eine automatische Metallisierung der Sensorleiterplatte im Bestückungsprozess der Sensorleiterplatte kostengünstig, schnell und einfach aufbringbar ist.

Vorzugsweise sind Leiterzüge zu einer elektrischen Kontaktierung der Federelemente mit dem Heizkörpertemperatursensor auf der Sensorleiterplatte mäanderförmig angeordnet und möglichst dünn ausgeführt. Des Weiteren sind die Federelemente auf der dem Gehäuserückteil zugewandten Seite der Hauptleiterplatte aufgelötet und nur durch dünne Durchkontaktierungen in der Hauptleiterplatte und über dünne und ebenfalls mäanderförmig verlegte Leiterzüge auf einer dem Gehäusevorderteil zugewandten Seite der Hauptleiterplatte mit der Auswerteeinheit verbunden. Dadurch ist die thermische Entkopplung der Sensorleiterplatte mit dem Heizkörpertemperatursensor von der Hauptleiterplatte und vom vorderen Bereich des Heizkostenverteilers optimiert, in welchem der Raumlufttemperatursensor angeordnet ist. Auf diese Weise ist eine Wärmeübertragung vom Heizkörper auf den Raumlufttemperatursensor und eine daraus resultierende Verfälschung von Sensorergebnissen des Raumlufttemperatursensors verhindert.

Zweckmäßigerweise ist die Hauptleiterplatte in Längsrichtung des Heizkostenverteilers und in einem mittleren Bereich zwischen dem Gehäusevorderteil und dem Gehäuserückteil im Gehäuse angeordnet. Durch die mittige Anordnung der Hauptleiterplatte im Gehäuse ist zwischen der Hauptleiterplatte und dem Gehäusevorderteil ein ausreichender Bauraum für einen Senderteil und eine Antenne vorhanden, so dass eine Datenfernübertragung des Heizkostenverteilers ermöglicht ist, bei welcher der Senderteil und die Antenne in eben diesem Bauraum im Gehäusevorderteil zu installieren sind, um eine sichere Datenfernübertragung zu ermöglichen.

Des Weiteren wirkt die Hauptleiterplatte durch deren mittige Anordnung im Gehäuse als eine Temperaturbarriere zwischen dem am Heizköper angeordneten Gehäuserückteil und dem vorderen Bereich des Heizkostenverteilers, in welchem der Raumlufttemperatursensor angeordnet ist, um die Temperatur der Raumluft zu ermitteln. Durch diese Temperaturbarriere ist die thermische Entkopplung des Raumlufttemperatursensors vom Heizkörper und vom Heizkörpertemperatursensor optimiert.

In einer bevorzugten Ausführungsform ist zwischen der Hauptleiterplatte und dem Gehäuserückteil ein Gehäuseinnenteil angeordnet, das eine Ausformung aufweist, durch welche die Sensorleiterplatte zumindest teilweise hindurchgeführt ist. Das Gehäuseinnenteil wirkt analog zur Hauptleiterplatte als eine weitere Temperaturbarriere zwischen dem am Heizköper angeordneten Gehäuserückteil und dem vorderen Bereich des Heizkostenverteilers, in welchem der Raumlufttemperatursensor angeordnet ist. Dadurch ist die thermische Entkopplung des Raumlufttemperatursensors vom Heizkörper und vom Heizkörpertemperatursensor weiter optimiert.

Vorzugsweise weist die Ausformung zumindest ein Halteelement für eine seitliche Führung der Sensorleiterplatte und/oder für eine Begrenzung einer Auslenkung der Sensorleiterplatte in Richtung einer Federkraft der Federelemente auf. Dadurch ist auf einfache Weise und ohne zusätzliche Herstellungskosten ein seitliches Abknicken der Federelemente und/oder der Sensorleiterplatte oder ein Wegrutschen der Sensorleiterplatte insbesondere während eines Verschließens des Gehäuses verhindert, wodurch die Sensorleiterplatte und der Heizkörpertemperatursensor exakt positioniert und an das Gehäuserückteil angepresst sind. Auf diese Weise sind eine optimale thermische Kopplung des Heizkörpertemperatursensors an das Gehäuserückteil und über dieses an den Heizkörper und eine einfache Montage des Heizkostenverteilers sichergestellt.

Durch die Begrenzung der Auslenkung der Sensorleiterplatte in Richtung der Federkraft der Federelemente mittels der Ausformung im Gehäuseinnenteil bzw. mittels des zumindest einen Halteelementes ist auf einfache Weise und ohne zusätzliche Herstellungskosten eine Transportsicherung der Sensorleiterplatte und des Heizkörpertemperatursensors in einem geöffneten Zustand des Gehäuses realisiert. Dadurch ragen die Sensorleiterplatte und der Heizkörpertemperatursensor nicht aus dem Gehäusevorderteil heraus, wodurch eine Beschädigung verhindert ist.

Ausführungsbeispiele der Erfindung werden im Folgenden anhand von Zeichnungen näher erläutert.

Darin zeigen:
- Figur 1A: eine erste Darstellung eines Heizkostenverteilers von vorn,
- Figur 1B: eine Schnittdarstellung eines Heizkostenverteilers entlang der Schnittlinie IB-IB in Figur 1A,
- Figur 2A: eine zweite Darstellung eines Heizkostenverteilers von vorn,
- Figur 2B: eine Schnittdarstellung eines Heizkostenverteilers entlang der Schnittlinie IIB-IIB in Figur 2A,
- Figur 3: eine erste perspektivische Darstellung einer Hauptleiterplatte und einer Sensorleiterplatte während deren Herstellung,
- Figur 4A: eine zweite perspektivische Darstellung einer Hauptleiterplatte und einer Sensorleiterplatte während deren Herstellung,
- Figur 4B: eine Detailansicht der Sensorleiterplatte aus Figur 4A,
- Figur 5: eine Detailansicht einer Sensorleiterplatte mit einer Wärmeleitfolie,
- Figur 6A: eine dritte Darstellung eines Heizkostenverteilers von vorn, und
- Figur 6B: eine Schnittdarstellung eines Heizkostenverteilers entlang der Schnittlinie VIB-VIB in Figur 6A.

Einander entsprechende Teile sind in allen Figuren mit den gleichen Bezugszeichen versehen.

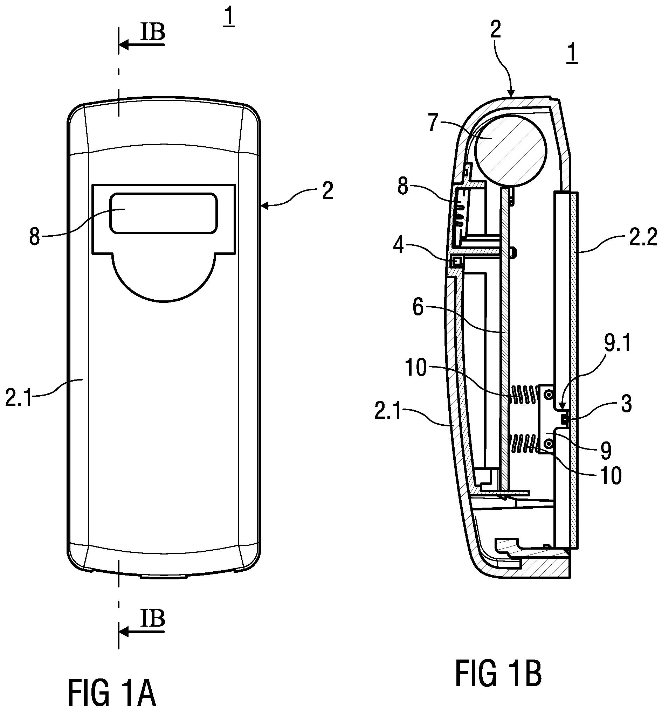

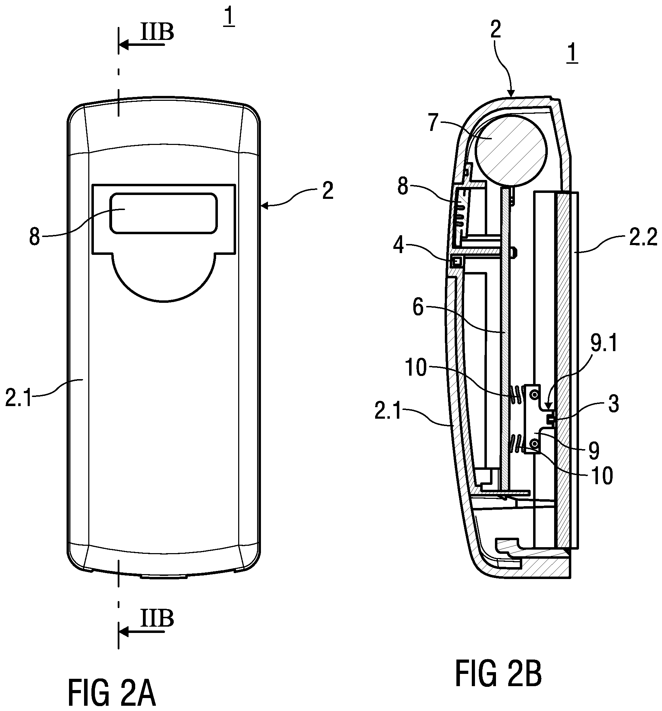

Figur 1A zeigt eine erste Ausführungsform eines Heizkostenverteilers 1 zur Messung einer von einem nicht näher dargestellten Heizkörper abgegebenen Wärmemenge von vorn und Figur 1B eine Schnittdarstellung des Heizkostenverteilers 1 entlang der Schnittlinie IB-IB. Figur 2A zeigt eine zweite Ausführungsform des Heizkostenverteilers 1 von vorn und Figur 2B eine Schnittdarstellung des Heizkostenverteilers 1 entlang der Schnittlinie IIB-IIB.

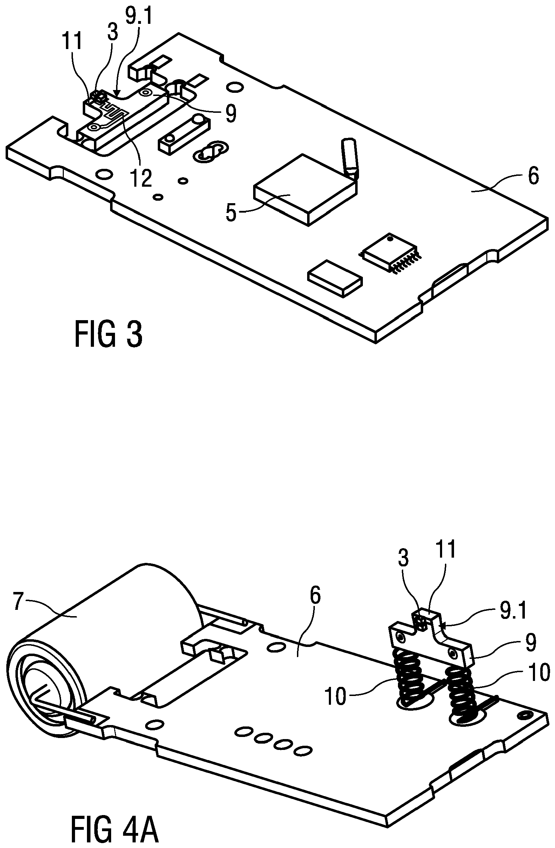

Der Heizkostenverteiler 1 weist ein Gehäuse 2 auf, welches ein Gehäusevorderteil 2.1 und ein Gehäuserückteil 2.2 umfasst und in welchem ein Heizkörpertemperatursensor 3, ein Raumlufttemperatursensor 4 und eine in Figur 3 näher dargestellte Auswerteeinheit 5 angeordnet sind, wobei die Auswerteeinheit 5 auf einer Hauptleiterplatte 6 angeordnet und mit den Temperatursensoren 3, 4 elektrisch verbunden ist. Auf der Hauptleiterplatte 6 sind auch im Wesentlichen alle weiteren elektronischen Komponenten des Heizkostenverteilers 1 angeordnet, mit Ausnahme des Heizkörpertemperatursensors 3 und vorzugsweise mit Ausnahme des Raumlufttemperatursensors 4, welcher in einem vorderen Bereich des Heizkostenverteilers 1 möglichst nah an einer Gehäusevorderseite platziert ist.

Des Weiteren sind im Gehäuse 2 eine Batterie 7 zur Energieversorgung des Heizkostenverteilers 1 und eine Anzeigeeinheit 8 in Form eines LC-Displays angeordnet. Die beiden in den Figuren 1A und 1B bzw. 2A und 2B dargestellten Ausführungsformen unterscheiden sich lediglich in einer Dicke des als Wärmeleitelement vorzugsweise metallisch ausgebildeten Gehäuserückteils 2.2.

Der Heizkörpertemperatursensor 3 ist auf einer Sensorleiterplatte 9 angeordnet, welche über zwei Federelemente 10 mit der Hauptleiterplatte 6 mechanisch und elektrisch verbunden ist und mittels dieser Federelemente 10 gegen das Gehäuserückteil 2.2 des Gehäuses 2 des Heizkostenverteilers 1 gepresst ist. Der zweipolige Heizkörpertemperatursensor 3 ist über diese beiden Federelemente 10 mit der Auswerteeinheit 5 auf der Hauptleiterplatte 6 elektrisch verbunden, so dass Sensorsignale des Heizkörpertemperatursensors 3 in der Auswerteeinheit 5 verarbeitbar sind.

Der Heizkörpertemperatursensor 3 ist im Bereich eines dem Gehäuserückteil 2.2 zugewandten Endes 9.1 der Sensorleiterplatte 9 angeordnet und schließt zumindest annähernd bündig mit einer Kante dieses Endes 9.1 der Sensorleiterplatte 9 ab. Dadurch ist der Heizkörpertemperatursensor 3 in unmittelbarer Nähe zum Gehäuserückteil 2.2 positioniert bzw. an dieses angepresst, wodurch eine thermische Kontaktierung des Heizkörpertemperatursensors 3 mit dem Gehäuserückteil 2.2 und über dieses mit dem Heizkörper optimiert ist.

Durch das Anpressen der Sensorleiterplatte 9 mit dem Heizkörpertemperatursensor 3 an das Gehäuserückteil 2.2 mittels der Federelemente 10 ist eine thermische Kopplung des Heizkörpertemperatursensors 3 an das Gehäuserückteil 2.2, mittels welchem der Heizkostenverteiler 1 am Heizkörper befestigt ist, optimiert. Des Weiteren ist der vordere Bereich des Heizkostenverteilers 1, welcher der Raumluft zugewandt ist und in welchem der Raumlufttemperatursensor 4 angeordnet ist, vom Heizkörper weitestgehend thermisch entkoppelt, da die Sensorleiterplatte 9 lediglich über die zwei Federelemente 10 mit der Hauptleiterplatte 6 verbunden ist. Dadurch ist eine Wärmeübertragung von der Sensorleiterplatte 9 auf die Hauptleiterplatte 6 und über diese in den vorderen Bereich des Heizkostenverteilers 1 und auf den Raumlufttemperatursensor 4 minimiert.

Dies ermöglicht sowohl eine exakte Erfassung der Heizkörpertemperatur als auch der Raumlufttemperatur und dadurch eine exakte Ermittlung der von einem Heizkörper abgegebenen Wärmemenge. Aufgrund dieser optimierten thermischen Entkopplung der beiden Sensoren 3, 4 voneinander ist der Heizkostenverteiler 1 für alle Anwendungsgebiete geeignet, insbesondere auch für Niedertemperaturheizungen.

Zweckmäßigerweise ist die Hauptleiterplatte 6 in Längsrichtung des Heizkostenverteilers 1 und in einem mittleren Bereich zwischen dem Gehäusevorderteil 2.1 und dem Gehäuserückteil 2.2 im Gehäuse 2 angeordnet. Durch die mittige Anordnung der Hauptleiterplatte 6 im Gehäuse 2 ist zwischen der Hauptleiterplatte 6 und dem Gehäusevorderteil 2.1 ein ausreichender Bauraum für einen Senderteil und eine Antenne vorhanden, so dass eine Datenfernübertragung des Heizkostenverteilers 1 ermöglicht ist, bei welcher der Senderteil und die Antenne in eben diesem Bauraum im Gehäusevorderteil 2.1 zu installieren sind, um eine sichere Datenfernübertragung zu ermöglichen.

Des Weiteren wirkt die Hauptleiterplatte 6 durch deren mittige Anordnung im Gehäuse 2 als eine Temperaturbarriere zwischen dem am Heizköper angeordneten Gehäuserückteil 2.2 und dem vorderen Bereich des Heizkostenverteilers 1, in welchem der Raumlufttemperatursensor 4 angeordnet ist, um die Temperatur der Raumluft zu ermitteln. Durch diese Temperaturbarriere ist die thermische Entkopplung des Raumlufttemperatursensors 4 vom Heizkörper und vom Heizkörpertemperatursensor 3 optimiert.

Als weiteren Vorteil ermöglicht die mittels der Federelemente 10 an das Gehäuserückteil 2.2 gepresste Sensorleiterplatte 9, welche vorzugsweise senkrecht zu einer dem Gehäuserückteil 2.2 zugewandten Seite der Hauptleiterplatte 6 angeordnet ist, eine Verwendung einer Vielzahl verschieden profilierter Gehäuserückteile 2.2. Die Gehäuserückteile 2.2, welche als Wärmeleitelement in Metallprofilform ausgebildet sind, um die Wärmeübertragung vom Heizkörper zum Heizkörpertemperatursensor 3 zu optimieren, weisen entsprechend einem jeweiligen Einsatzbereich des Heizkostenverteilers 1 jeweils eine unterschiedliche Dicke auf, woraus jeweils ein unterschiedlicher Abstand von der Hauptleiterplatte 6 zum Gehäuserückteil 2.2 resultiert.

Mittels der Federelemente 10, welche im hier dargestellten Beispiel als Schraubenfedern aus einem metallischen und bevorzugt gut lötbaren Werkstoff, z.B. verzinnte Berylliumbronze, ausgebildet sind, sind sowohl größere als auch kleinere Abstände überbrückbar, wodurch die Sensorleiterplatte 9 an jedes Gehäuserückteil 2.2 optimal anpressbar und thermisch koppelbar und mit der Hauptleiterplatte 6 sicher elektrisch kontaktierbar ist, wobei eine Breite des Heizkostenverteilers 1 minimiert ist und jeweils gleich bleibt bzw. eine Maximalbreite nicht überschreitet. Dadurch ist der Heizkostenverteiler 1 sehr flexibel einsetzbar und lediglich durch eine Auswahl eines jeweils geeigneten Gehäuserückteils 2.2 an den jeweiligen Einsatzbereich anzupassen. Dies ermöglicht eine sehr effiziente und kostengünstige Produktion des Heizkostenverteilers 1 in großen Stückzahlen, da nicht für jeden Einsatzbereich eine andere Ausführungsform erforderlich ist.

Das Gehäusevorderteil 2.1 ist mit dem jeweiligen, vorzugsweise bereits am Heizkörper befestigten Gehäuserückteil 2.2 über jeweilige nicht näher dargestellte Gehäusemerkmale befestigbar, mittels welchen beispielsweise eine Rastverbindung realisiert ist. Zusätzlich ist das Gehäuse 2 vorzugsweise mittels einer zerstörungsfrei nicht lösbaren Verbindung sicherbar, beispielsweise mit einer Plombe. Dadurch ist eine Manipulation des Heizkostenverteilers 1 verhindert bzw. eine erfolgte Manipulation ist sicher und eindeutig erkennbar.

Wie in Figur 3 dargestellt, ist als Heizkörpertemperatursensor 3 ein kostengünstiger so genannter NTC-Widerstand (Negative Temperature Coefficient Thermistors) in SMD-Bauform (Surface-mounted device), d. h. als oberflächenmontierbares Bauelement einsetzbar und automatisiert auf der Sensorleiterplatte 9 montierbar. Dadurch sind Herstellungskosten gegenüber Geräten nach dem Stand der Technik erheblich minimiert.

Des Weiteren ist die Sensorleiterplatte 9 zusammen mit der Hauptleiterplatte 6 in einem Fertigungsprozess automatisiert herstellbar, d. h. es sind automatisiert alle Bauelemente installierbar und kontaktierbar und/oder verlötbar und weitere Metallisierungen, Kontaktierungen und Leiterbahnen aufbringbar, beispielsweise durch eine gemeinsame Lackierung, Belichtung, Ätzung und weitere benötigte Fertigungsschritte. Insbesondere in einem so genannten Leiterplattennutzen sind auf diese Weise eine Vielzahl von Hauptleiterplatten 6 und Sensorleiterplatten 9 gleichzeitig und sehr kostengünstig herstellbar.

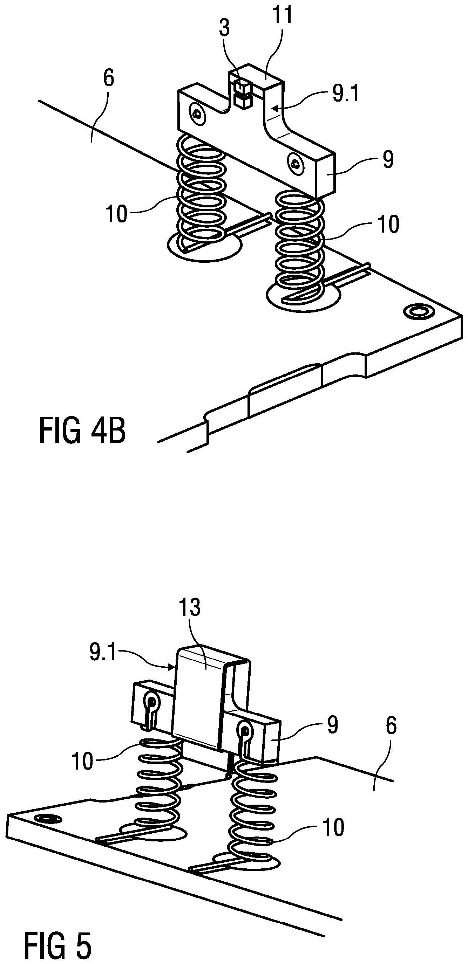

Danach ist die Sensorleiterplatte 9 von der Hauptleiterplatte 6 abzutrennen, beispielsweise in einem Arbeitsschritt während einer Vereinzelung der Leiterplatten 6, 9 aus dem Leiterplattennutzen. Mittels der Federelemente 10 ist die Sensorleiterplatte 9 dann wieder an der Hauptleiterplatte 6 zu befestigen, d. h. die Federelemente 10 sind mit der Hauptleiterplatte 6 und der Sensorleiterplatte 9 zu verlöten, wie in den Figuren 4A und 4B dargestellt. Dies ermöglicht eine einfach zu realisierende und daher kostengünstige und des Weiteren eine mechanisch und elektrisch sichere Verbindung der Federelemente 10 mit der Sensorleiterplatte 9 bzw. mit der Hauptleiterplatte 6.

Durch eine derartige Herstellung und Bestückung der Sensorleiterplatte 9 zusammen mit der Hauptleiterplatte 6 fallen zur Herstellung der Sensorleiterplatte 9 keine zusätzlichen Herstellungskosten und kein zusätzlicher Herstellungsaufwand an. Des Weiteren sind auch die Federelemente 10 zur Verbindung der Sensorleiterplatte 9 mit der Hauptleiterplatte 6 sehr kostengünstig.

Durch die Verwendung eines derartigen NTC-Widerstandes in SMD-Bauform als Heizkörpertemperatursensor 3 sind die Sensorleiterplatte 9 und der Heizkörpertemperatursensor 3 sehr klein ausführbar und daher sehr Bauraum sparend im Heizkostenverteiler 1 installierbar, wodurch eine Größe, insbesondere eine Dicke des Heizkostenverteilers 1 verringert ist. Dadurch ist der Heizkostenverteiler 1 sehr klein ausführbar und unauffällig und Bauraum sparend am Heizkörper anordbar.

Um eine Wärmeübertragung vom Gehäuserückteil 2.2 über die an dieses angepresste Sensorleiterplatte 9 auf den Heizkörpertemperatursensor 3 zu optimieren, weist das dem Gehäuserückteil 2.2 zugewandte Ende 9.1 der Sensorleiterplatte 9, wie in den Figuren 3, 4A und 4B dargestellt, eine Wärmeleitbeschichtung 11 auf, mit welcher der Heizkörpertemperatursensor 3 thermisch kontaktiert ist. Diese Wärmeleitbeschichtung 11 ist im hier dargestellten Beispiel eine metallische Beschichtung, welche durch eine automatische Metallisierung der Sensorleiterplatte 9 im Bestückungsprozess der Sensorleiterplatte 9 kostengünstig, schnell und einfach aufbringbar ist und auf welche der Heizkörpertemperatursensor 3 aufsetzbar ist. Diese Beschichtung erstreckt sich von einer am Gehäuserückteil 2.2 anliegenden Stirnseite der Sensorleiterplatte 9 bis unter eine Lötfläche des Heizkörpertemperatursensors 3.

Vorzugsweise sind, wie in Figur 3 dargestellt, Leiterzüge 12 zu einer elektrischen Kontaktierung der Federelemente 10 mit dem Heizkörpertemperatursensor 3 auf der Sensorleiterplatte 9 mäanderförmig angeordnet und möglichst dünn ausgeführt. Des Weiteren sind die Federelemente 10 auf der dem Gehäuserückteil 2.2 zugewandten Seite der Hauptleiterplatte 6 aufgelötet und nur durch dünne Durchkontaktierungen in der Hauptleiterplatte 6 und über dünne und ebenfalls mäanderförmig verlegte Leiterzüge auf einer dem Gehäusevorderteil 2.1 zugewandten Seite der Hauptleiterplatte 6 mit der Auswerteeinheit 5 verbunden. Dadurch ist die thermische Entkopplung der Sensorleiterplatte 9 mit dem Heizkörpertemperatursensor 3 von der Hauptleiterplatte 6 und vom vorderen Bereich des Heizkostenverteilers 1 optimiert, in welchem der Raumlufttemperatursensor 4 angeordnet ist. Auf diese Weise ist eine Wärmeübertragung vom Heizkörper auf den Raumlufttemperatursensor 4 und eine daraus resultierende Verfälschung von Sensorergebnissen des Raumlufttemperatursensors 4 verhindert.

Wie in Figur 5 dargestellt, sind nahezu die gesamte Sensorleiterplatte 9 und der Heizkörpertemperatursensor 3 mit einer elektrisch isolierenden Wärmeleitfolie 13 umhüllt, so dass diese elektrisch beispielsweise gegenüber des vorzugsweise metallisch ausgebildeten Gehäuserückteils 2.2 sowie gegenüber der Hauptleiterplatte 6 und weiterer Komponenten des Heizkostenverteilers 1 isoliert sind und eine thermische Kopplung des Heizkörpertemperatursensors 3 über die Wärmeleitfolie 13 an das Gehäuserückteil 2.2 und über dieses an den Heizkörper optimiert ist. Diese sehr kostengünstige Wärmeleitfolie 13 ist zweckmäßigerweise aus Kunststoff, zum Beispiel aus Polyimid, und weist für eine optimierte Wärmeleitung vorteilhafterweise eingelagerte Metallpartikel auf, beispielsweise Aluminiumpartikel.

Die Wärmeleitfolie 13 ist als Streifen in Schleifenform um die gesamte Sensorleiterplatte 9 herumgeführt und beispielsweise verklebt, nachdem die Sensorleiterplatte 9 bereits mit den Federelementen 10 verlötet ist. Vor oder bevorzugt erst nach dem Anbringen der Wärmeleitfolie 13, um das Anbringen der Wärmeleitfolie 13 zu erleichtern, sind die Federelemente 10 dann mit der Hauptleiterplatte 6 zu verlöten.

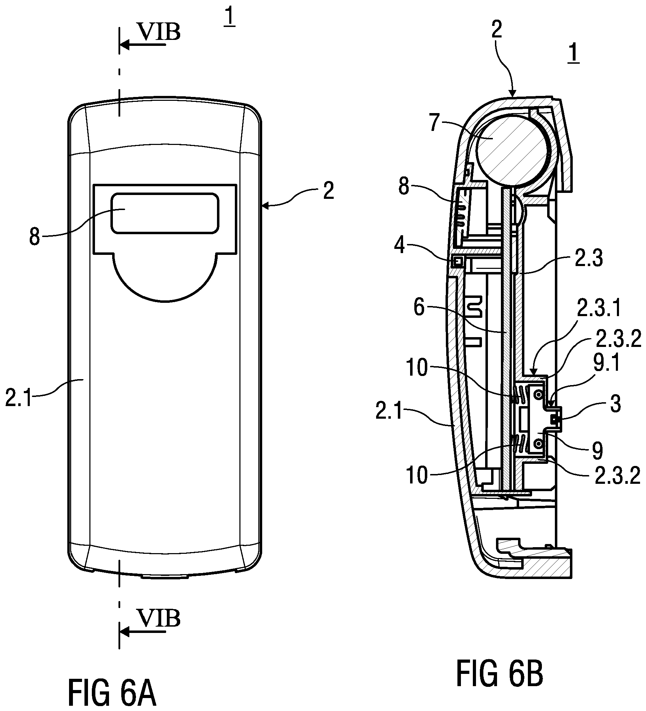

Wie in den Figuren 6A und 6B dargestellt, ist vorzugsweise zwischen der Hauptleiterplatte 6 und dem Gehäuserückteil 2.2 ein Gehäuseinnenteil 2.3 angeordnet, das eine Ausformung 2.3.1 aufweist, durch welche die Sensorleiterplatte 9 zumindest teilweise hindurchgeführt ist. Das Gehäuseinnenteil 2.3 wirkt analog zur Hauptleiterplatte 6 als eine weitere Temperaturbarriere zwischen dem am Heizköper angeordneten Gehäuserückteil 2.2 und dem vorderen Bereich des Heizkostenverteilers 1, in welchem der Raumlufttemperatursensor 4 angeordnet ist.

Dadurch ist die thermische Entkopplung des Raumlufttemperatursensors 4 vom Heizkörper und vom Heizkörpertemperatursensor 3 weiter optimiert.

Die Ausformung 2.3.1 weist in der hier dargestellten Ausführungsform zwei Halteelemente 2.3.2 für eine seitliche Führung der Sensorleiterplatte 9 und für eine Begrenzung einer Auslenkung der Sensorleiterplatte 9 in Richtung einer Federkraft der Federelemente 10 auf. Dadurch ist auf einfache Weise und ohne zusätzliche Herstellungskosten ein seitliches Abknicken der Federelemente 10 und/oder der Sensorleiterplatte 9 oder ein Wegrutschen der Sensorleiterplatte 9 insbesondere während eines Verschließens des Gehäuses 2 verhindert, wodurch die Sensorleiterplatte 9 und der Heizkörpertemperatursensor 3 exakt positioniert und an das Gehäuserückteil 2.2 angepresst sind. Auf diese Weise sind eine optimale thermische Kopplung des Heizkörpertemperatursensors 3 an das Gehäuserückteil 2.2 und über dieses an den Heizkörper und eine einfache Montage des Heizkostenverteilers 1 sichergestellt.

Durch die Begrenzung der Auslenkung der Sensorleiterplatte 9 in Richtung der Federkraft der Federelemente 10 mittels der Halteelemente 2.3.2 ist auf einfache Weise und ohne zusätzliche Herstellungskosten eine Transportsicherung der Sensorleiterplatte 9 und des Heizkörpertemperatursensors 3 in einem hier dargestellten geöffneten Zustand des Gehäuses 2 realisiert. Dadurch ragen die Sensorleiterplatte 9 und der Heizkörpertemperatursensor 3 nicht aus dem Gehäusevorderteil 2.1 heraus, wodurch eine Beschädigung verhindert ist.

### BEZUGSZEICHENLISTE

- 1: Heizkostenverteiler
- 2: Gehäuse
- 2.1: Gehäusevorderteil
- 2.2: Gehäuserückteil
- 2.3: Gehäuseinnenteil
- 2.3.1: Ausformung
- 2.3.2: Halteelement
- 3: Heizkörpertemperatursensor
- 4: Raumlufttemperatursensor
- 5: Auswerteeinheit
- 6: Hauptleiterplatte
- 7: Batterie
- 8: Anzeigeeinheit
- 9: Sensorleiterplatte
- 9.1: Ende der Sensorleiterplatte
- 10: Federelement
- 11: Wärmeleitbeschichtung
- 12: Leiterzug
- 13: Wärmeleitfolie

## Patentansprüche

1. Heizkostenverteiler (1) zur Messung einer von einem Heizkörper abgegebenen Wärmemenge, mit einem Gehäuse (2), welches ein Gehäusevorderteil (2.1) und ein Gehäuserückteil (2.2) umfasst und in welchem mindestens ein Heizkörpertemperatursensor (3), mindestens ein Raumlufttemperatursensor (4) und eine Auswerteeinheit (5) angeordnet sind, wobei die Auswerteeinheit (5) auf einer Hauptleiterplatte (6) angeordnet und mit den Temperatursensoren (3, 4) elektrisch verbunden ist,
**dadurch gekennzeichnet, dass** der Heizkörpertemperatursensor (3) auf einer Sensorleiterplatte (9) angeordnet ist, welche über zumindest zwei Federelemente (10) mit der Hauptleiterplatte (6) mechanisch und elektrisch verbunden ist und mittels dieser Federelemente (10) gegen das Gehäuserückteil (2.2) des Gehäuses (2) des Heizkostenverteilers (1) gepresst ist.

2. Heizkostenverteiler (1) nach Anspruch 1,
**dadurch gekennzeichnet, dass** die Federelemente (10) mit der Hauptleiterplatte (6) und/oder mit der Sensorleiterplatte (9) verlötet sind.

3. Heizkostenverteiler (1) nach Anspruch 1 oder 2,
**dadurch gekennzeichnet, dass** zwischen dem Gehäuserückteil (2.2) und der Sensorleiterplatte (9) mit dem Heizkörpertemperatursensor (3) eine elektrisch isolierende Wärmeleitfolie (13) angeordnet ist.

4. Heizkostenverteiler (1) nach einem der Ansprüche 1 bis 3,
**dadurch gekennzeichnet, dass** der Heizkörpertemperatursensor (3) im Bereich eines dem Gehäuserückteil (2.2) zugewandten Endes (9.1) der Sensorleiterplatte (9) angeordnet ist.

5. Heizkostenverteiler (1) nach Anspruch 4,
**dadurch gekennzeichnet, dass** das dem Gehäuserückteil (2.2) zugewandte Ende (9.1) der Sensorleiterplatte (9) eine Wärmeleitbeschichtung (11) aufweist, mit welcher der Heizkörpertemperatursensor (3) thermisch kontaktiert ist.

6. Heizkostenverteiler (1) nach Anspruch 5,
**dadurch gekennzeichnet, dass** die Wärmeleitbeschichtung (11) eine metallische Beschichtung ist.

7. Heizkostenverteiler (1) nach einem der vorhergehenden Ansprüche,
**dadurch gekennzeichnet, dass** Leiterzüge (12) für eine elektrische Kontaktierung der Federelemente (10) mit dem Heizkörpertemperatursensor (3) auf der Sensorleiterplatte (9) mäanderförmig angeordnet sind.

8. Heizkostenverteiler (1) nach einem der vorhergehenden Ansprüche,
**dadurch gekennzeichnet, dass** die Hauptleiterplatte (6) in Längsrichtung des Heizkostenverteilers (1) und in einem mittleren Bereich zwischen dem Gehäusevorderteil (2.1) und dem Gehäuserückteil (2.2) im Gehäuse (2) angeordnet ist.

9. Heizkostenverteiler (1) nach einem der vorhergehenden Ansprüche,
**dadurch gekennzeichnet, dass** zwischen der Hauptleiterplatte (6) und dem Gehäuserückteil (2.2) ein Gehäuseinnenteil (2.3) angeordnet ist, das eine Ausformung (2.3.1) aufweist, durch welche die Sensorleiterplatte (9) zumindest teilweise hindurchgeführt ist.

10. Heizkostenverteiler (1) nach Anspruch 9,
**dadurch gekennzeichnet, dass** die Ausformung (2.3.1) zumindest ein Halteelement (2.3.2) für eine seitliche Führung der Sensorleiterplatte (9) und/oder für eine Begrenzung einer Auslenkung der Sensorleiterplatte (9) in Richtung der Federkraft der Federelemente (10) aufweist.

## Claims

1. Heating cost distributor (1) for measuring an amount of heat output by a radiator, having a housing (2) which comprises a front housing part (2.1) and a rear housing part (2.2) and in which at least one radiator temperature sensor (3), at least one room air temperature sensor (4) and an evaluation unit (5) are arranged, the evaluation unit (5) being arranged on a main circuit board (6) and being electrically connected to the temperature sensors (3, 4),
**characterized in that** the radiator temperature sensor (3) is arranged on a sensor circuit board (9), which is connected mechanically and electrically to the main circuit board (6) via at least two spring elements (10) and is pressed against the rear housing part (2.2) of the housing (2) of the heating cost distributor (1) by means of these spring elements (10).

2. Heating cost distributor (1) according to Claim 1,
**characterized in that** the spring elements (10) are soldered to the main circuit board (6) and/or to the sensor circuit board (9).

3. Heating cost distributor (1) according to Claim 1 or 2,
**characterized in that** an electrically insulating thermally conductive film (13) is arranged between the rear housing part (2.2) and the sensor circuit board (9) having the radiator temperature sensor (3).

4. Heating cost distributor (1) according to one of Claims 1 to 3,
**characterized in that** the radiator temperature sensor (3) is arranged in the area of an end (9.1) of the sensor circuit board (9) that faces the rear housing part (2.2).

5. Heating cost distributor (1) according to Claim 4,
**characterized in that** the end (9.1) of the sensor circuit board (9) that faces the rear housing part (2.2) has a thermally conductive coating (11), with which the radiator temperature sensor (3) makes thermal contact.

6. Heating cost distributor (1) according to Claim 5,
**characterized in that** the thermally conductive coating (11) is a metallic coating.

7. Heating cost distributor (1) according to one of the preceding claims,
**characterized in that** circuit tracks (12) for making electrical contact between the spring elements (10) and the radiator temperature sensor (3) are arranged in the form of meanders on the sensor circuit board (9).

8. Heating cost distributor (1) according to one of the preceding claims,
**characterized in that** the main circuit board (6) is arranged in the housing (2) in the longitudinal direction of the heating cost distributor (1) and in a central region between the front housing part (2.1) and the rear housing part (2.2).

9. Heating cost distributor (1) according to one of the preceding claims,
**characterized in that** an inner housing part (2.3) is arranged between the main circuit board (6) and the rear housing part (2.2) and has a moulding (2.3.1), through which the sensor circuit board (9) is at least partly led.

10. Heating cost distributor (1) according to Claim 9,
**characterized in that** the moulding (2.3.1) has at least one holding element (2.3.2) for laterally guiding the sensor circuit board (9) and/or for limiting a deflection of the sensor circuit board (9) in the direction of the spring force of the spring elements (10).

## Revendications

1. Répartiteur de coûts de chauffage (1) destiné à la mesure d'une quantité de chaleur émise par un radiateur, avec un boîtier (2), lequel comprend une partie avant de boîtier (2.1) et une partie arrière de boîtier (2.2) et dans lequel sont disposées au moins une sonde de température du radiateur (3), au moins une sonde de température de l'air ambiant (4) et une unité de traitement (5), selon lequel l'unité de traitement (5) est disposée sur une carte principale à circuits imprimés (6) et est reliée électriquement aux sondes de température (3, 4),
**caractérisé en ce que**
la sonde de température du radiateur (3) est disposée sur une carte de capteur à circuits imprimés (9), laquelle est reliée mécaniquement et électriquement avec la carte principale à circuits imprimés (6), par l'intermédiaire de tout au moins deux éléments formant ressorts (10), et est comprimée, au moyen de ces éléments formant ressorts (10), contre la partie arrière de boîtier (2.2) du boîtier (2) du répartiteur de coûts de chauffage (1).

2. Répartiteur de coûts de chauffage (1) selon la revendication 1,
**caractérisé en ce que**
les éléments formant ressorts (10) sont brasés avec la carte principale à circuits imprimés (6) et/ou avec la carte de capteur à circuits imprimés (9).

3. Répartiteur de coûts de chauffage (1) selon la revendication 1 ou 2,
**caractérisé en ce que**
un film de conduction thermique, lequel est électriquement isolant (13), est disposé avec la sonde de température du radiateur (3) entre la partie arrière de boîtier (2.2) et la carte de capteur à circuits imprimés (9).

4. Répartiteur de coûts de chauffage (1) selon l'une des revendications 1 à 3,
**caractérisé en ce que**
la sonde de température du radiateur (3) est disposée dans la zone d'une extrémité (9.1) de la carte de capteur à circuits imprimés (9), laquelle extrémité est tournée vers la partie arrière de boîtier (2.2).

5. Répartiteur de coûts de chauffage (1) selon la revendication 4,
**caractérisé en ce que**
l'extrémité (9.1) de la carte de capteur à circuits imprimés (9), laquelle extrémité est tournée vers la partie arrière de boîtier (2.2), présente un revêtement de conduction thermique (11), au moyen duquel la sonde de température du radiateur (3) est thermiquement mise en contact.

6. Répartiteur de coûts de chauffage (1) selon la revendication 5,
**caractérisé en ce que**
le revêtement de conduction thermique (11) est un revêtement métallique.

7. Répartiteur de coûts de chauffage (1) selon l'une des revendications précédentes,
**caractérisé en ce que**
des pistes conductrices (12) sont disposées en forme de méandres sur la carte de capteur à circuits imprimés (9) en vue de la mise en contact électrique des éléments formant ressorts (10) avec la sonde de température du radiateur (3).

8. Répartiteur de coûts de chauffage (1) selon l'une des revendications précédentes,
**caractérisé en ce que**
la carte principale à circuits imprimés (6) est disposée dans le boîtier (2), dans la direction longitudinale du répartiteur de coûts de chauffage (1) et dans une zone centrale se trouvant entre la partie avant de boîtier (2.1) et la partie arrière de boîtier (2.2).

9. Répartiteur de coûts de chauffage (1) selon l'une des revendications précédentes,
**caractérisé en ce que**
une partie intérieure de boîtier (2.3) est disposée entre la carte principale à circuits imprimés (6) et la partie arrière de boîtier (2.2), laquelle partie intérieure de boîtier présente un creux (2.3.1), à travers lequel la carte de capteur à circuits imprimés (9) est guidée, tout au moins en partie.

10. Répartiteur de coûts de chauffage (1) selon la revendication 9,
**caractérisé en ce que**
le creux (2.3.1) présente tout au moins un élément de maintien (2.3.2) pour un guidage latéral de la carte de capteur à circuits imprimés (9) et/ou pour une délimitation d'une déviation de la carte de capteur à circuits imprimés (9) dans la direction de la force du ressort des éléments formant ressorts (10).
